# EUROPÄISCHE PATENTSCHRIFT

(11) **EP 1 003 957 B1**
(45) Veröffentlichungstag und Bekanntmachung des Hinweises auf die Patenterteilung: **02.05.2002**
(21) Anmeldenummer: 98948768.1
(22) Anmeldetag: 11.08.1998
(51) Int. Cl.: F01L 13/00, F02D 13/02

(54) **VERFAHREN ZUR EINSTELLUNG DES VENTILHUBES**
METHOD FOR ADJUSTING A VALVE LIFT
PROCEDE D'AJUSTEMENT DE LA LEVEE D'UNE SOUPAPE

(30) Priorität: 14.08.1997 DE 19735366
(43) Veröffentlichungstag der Anmeldung: 31.05.2000
(73) Patentinhaber: SIEMENS AKTIENGESELLSCHAFT, 80333 München (DE)
(72) Erfinder: KOCH, Achim, D-93105 Tegernheim (DE); KLINGSEIS, Bernhard, D-93047 Regensburg (DE)
(86) Internationale Anmeldenummer: DE9802310
(87) Internationale Veröffentlichungsnummer: WO9909303

(56) Entgegenhaltungen:
- WO-A-95/13458
- DE-A- 4 325 902

## Beschreibung

Die Erfindung betrifft ein Verfahren zur Einstellung des Ventilhubes eines Einlaßventils einer Brennkraftmaschine gemäß dem Oberbegriff des Patentanspruchs 1.

Bei konventionellen Ottomotoren mit Drosselklappenlaststeuerung entspricht Vollast dem Zustand, in dem die volle Drosselklappenöffnung erreicht ist. Es sind aber auch Vorrichtungen zur variablen Steuerung der Ventile von Brennkraftmaschinen, insbesondere zur Laststeuerung von Ottomotoren über die Einlaßhubfunktionen der Einlaßventile bekannt, bei denen der Hub und die Öffnungsdauer der Einlaßventile verändert werden können. Hierzu sind verschiedene Systeme bekannt, beispielsweise EP 0 638 706 oder DE 42 44 550. In letzterem Dokument wird ein Koppelgetriebe erläutert, mit dem zwei Nockenwellen relativ zueinander verdrehbar sind. Das zugehörige Ventil wird von einem Übertragungshebel betätigt, cer die Nockenstellung beider Nockenwellen abtastet, so daß damit der Ventilhub veränderbar ist. Die Nockenwellenverstellung dient insbesondere zur Einsparung von Ladungswechselverlusten.

DE 32 10 914 A1 betrifft ein Nockenwellensteuergerät zur drehzahl- und lastabhängigen Winkelverstellung einer Nockenwelle einer Brennkraftmaschine. Dabei wird aus einem Sollwertspeicher last- und drehzahlabhängig ein fest eingestellter Sollwert für die Nockenwellenverstellung ausgelesen.

Aus WO 95/13458 ist ein Verfahren zur Optimierung der Füllung eines Zylinders durch Variation des Schließzeitpunktes eines Einlaßventils bei einer Brennkraftmaschine mit hydraulischer oder elektromagnetischer Schließzeitpunktverstellung bekannt.

Der Erfindung liegt die Aufgabe zugrunde, ein Verfahren anzugeben, mit dem bei einer Brennkraftmaschine mit veränderlichem Ventilhub bei Vollast drehzahlabhängig der optimale Ventilhub ermittelt und eingestellt werden kann.

Die genannte Aufgabe ist erfindungsgemäß mit den Merkmalen des Patentanspruchs 1 gelöst. Vorteilhafte Weiterbildungen und weitere Aspekte der Erfindung sind in den Unteransprüchen gekennzeichnet.

So wird bei Laststeuerung mit veränderlichem Ventilhub der Betriebspunkt Vollast bei unterschiedlichen Drehzahlen mit bestimmten Ventilhüben erreicht, die vom Maximalhub jeweils verschieden sind. Um drehzahlabhängig bei Vollastanforderung den optimalen Ventilhub zu ermitteln, wird erfindungsgemäß im Motorsteuergerät eine Korrekturfunktion ausgelöst, welche den Ventilhub ermittelt, bei dem sich bei jeder Drehzahl jeweils der optimale Massenstrom in den Zylinder ergibt. Das Auslösen der Korrektur erfolgt sobald eine Vollastanforderung erkannt ist. Ein Sollwert für den Ventilhub wird aus einem Kennfeld abhängig von der aktuellen Drehzahl ermittelt. Die Sollwerte des Kennfeldes sind an einem Motorprüfstand oder durch Simulationsrechnungen ermittelt. Die Sollwerte sind derart ermittelt, daß sich jeweils der optimale Massenstrom in den Zylinder ergibt.

Der Sollwert des Ventilhubs wird zunächst schrittweise erhöht und anschließend schrittweise verkleinert. Der erhöhte bzw. erniedrigte Sollwert des Ventilhubs wird jeweils eingestellt und der zugehörige Massenstrom in den Zylinder wird gemessen. Anschließend wird der bei Einstellung der Ventilhübe erzielte maximale Massenstrom ermittelt und der dazu gehörige Ventilhub eingestellt. Die Werte im Kennfeld können nun korrigiert werden, so daß bei einer nächstfolgenden Vollastanforderung der korrigierte Ventilhub zur Verfügung steht.

Erfindungsgemäß werden so die Einstellungsprcbleme gelöst, die sich infolge von Fertigungstoleranzen ergeben, wenn beispielsweise der Einstellmechanismus für den Ventilhub ausgewechselt wird und sich dementsprechend die Ventilhubsollwerte ändern, die zum Motorbetriebszustand Vollast führen. Mit der erfindungsgemäßen Korrektur lassen sich somit hieraus resultierende Leistungseinbußen verhindern. Aber auch im Normalbetrieb kann es durch Verschleiß und Temperatureinflüsse zu einer Verschiebung der Vollastkennlinie kommen. Erfindungsgemäß läßt sich somit das Leistungspotential der Brennkraftmaschine über deren gesamte Lebensdauer erhalten.

Nachstehend ist die Erfindung anhand der Zeichnung näher erläutert. Die Zeichnung zeigt:
- Fig. 1: ein Blockschaltbild für die Ansteuerung des Stellgliedes für den Ventiltrieb und
- Fig. 2: ein Flußdiagramm zur Darstellung der Adaptionsfunk tion.

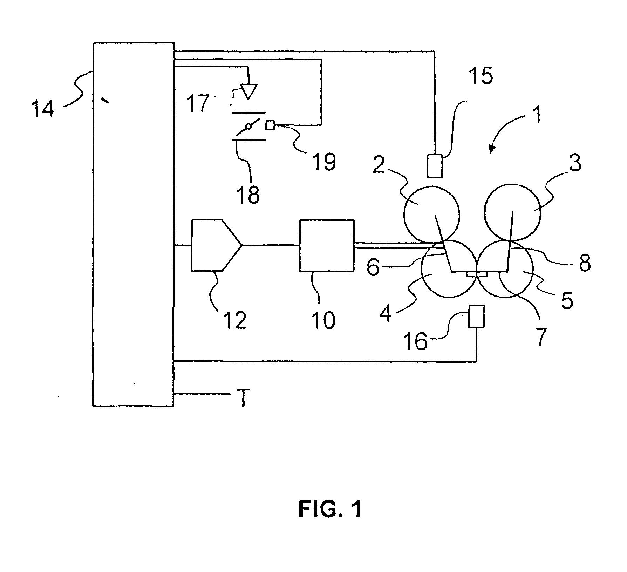

Fig. 1 zeigt einen aus DE 42 44 550 bekannten Ventiltrieb 1 mit zwei Nockenwellen 2 und 3, an deren Nocken je eine Rolle läuft (nicht dargestellt). Die beiden Rollen sind über einen Übertragungshebel miteinander verbunden und betätigen ein Ventil (nicht dargestellt). Die Nockenwelle 2 ist von der Kurbelwelle angetrieben und der Antrieb der zweiten Nockenwelle 3 erfolgt über zwei Zwischenzahnräder 4 und 5, die über drei Koppeln 6, 7 und 8 miteinander verbunden sind. Auf die Koppel 6 dieses Koppelgetriebes wirkt ein Stellglied 10. Durch Verschwenken der Koppel 6 um den Drehpunkt der Nockenwelle 2 wird über den Zahneingriff der Zahnräder 4 und 5 die Nockenwelle 3 relativ zur Nockenwelle 2 verdreht. Damit lassen sich Steuerzeit und Hub des zugehörigen Einlaßventiles verändern.

Das Stellglied 10 zur Verstellung des Koppelgetriebes wird von einer Leistungsstufe 12 angesteuert, die ein Ansteuersignal, insbesondere ein impulsbreitenmoduliertes Signal von einem Motorsteuergerät 14 erhält. Ferner ist ein Sensor 15 vorgesehen, der die Drehzahl der Nockenwelle 2 mißt, die ein Maß für die Kurbelwellendrehzahl ist. Ein weiterer Sensor 16 mißt die Verstellung des Koppelgetriebes und ist so ein Maß für den vom Koppelgetriebe eingestellten Ventilhub. Ferner wird dem Motorsteuererät 14 von einem Fahrpedalgeber 17 noch ein Signal zugeführt, das bei Vollastanforderung am Fahrpedal erzeugt wird, sowie ein Meßsignal der Kühlwassertemperatur T.

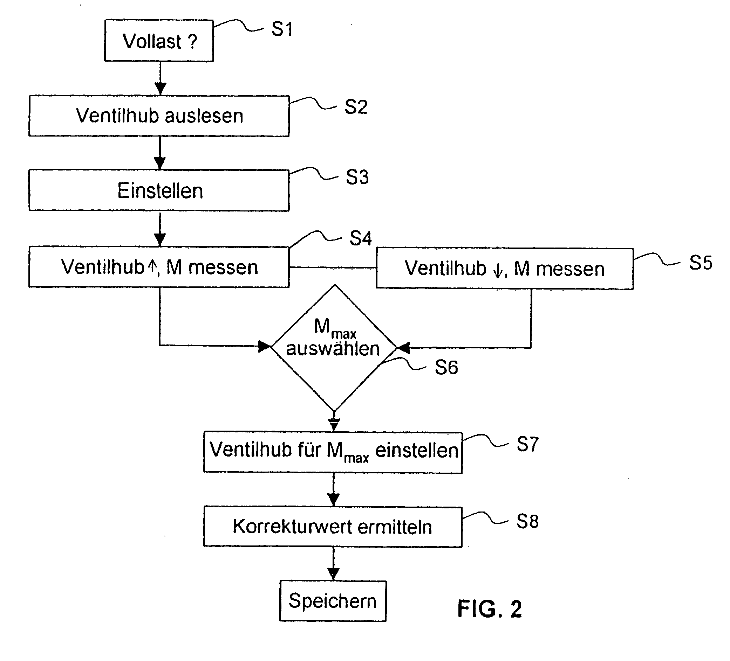

Die Signalverarbeitung für die erfindungsgemäße Korrekturfunktion ist im Flußdiagramm der Fig. 2 erläutert. Steigt die Kühlwassertemperatur des Motors über einen vorbestimmten Wert, so wird bei Vollasterkennung im Steuergerät 14 der Ablauf des folgenden Algorithmus ausgelöst:
S1) Die Vollastanforderung vor. Seiten des Fahrpedalgebers 17 wird abgefragt.
S2) Ein Sollwert des Ventilhubes wird aus dem Kennfeld abhängig von der aktuellen Drehzahl ermittelt und mit einem Korrekturwert korrigiert. S3) Der korrigierte Sollwert des Ventilhubes wird vom Stellglied eingestellt.
S4) Der Sollwert des Ventilhubes wird in vorbestimmten Schritten nach oben, also in Richtung größerer Ventilhübe, verändert, vom Stellglied eingestellt und dabei jeweils der Massenstrom M im Sensor 19 des Ansaugkanals 18 gemessen und vorzugsweise daraus von einem Beobachter der Massenstrom in einen Zylinder der Brennkraftmaschine ermittelt. Dabei muß die Drehzahl innerhalb bestimmter Grenzwerte bleiben. Es ergeben sich somit Datenpaare aus angesaugtem Massenstrom M und eingestelltem Ventilhub.
S5) Der Sollwert des Ventilhubes wird in vorbestimmten Schritten nach unten verändert, vom Stellglied eingestellt und der dabei auftretende Massenstrom M gemessen; die Datenpaare werden gespeichert, wobei die Drehzahl innerhalb bestimmter Grenzwerte bleiben muß.
S6) Es wird das Datenpaar ausgewählt, das den maximalen angeaugten Massenstrom Mmax beinhaltet.
S7) Der dem maximalen Massenstrom Mmax zugehörige veränderte Sollwert des Ventilhubes wird nun von dem Stellglied eingestellt.
S8) Aus dem ausgewählten veränderten Sollwert des Ventilhubes und dem aus dem Kennfeld ermittelten Sollwert des Ventilhubes wird ein Korrekturwert ermittelt und abgespeichert. Der Korrekturwert kann subtraktiv ermittelt werden und ist dann durch die Differenz zwischen den beiden Werten bestimmt. Der Korrekturwert kann auch multiplikativ als Korrekturfaktor bestimmt werden.
S9) Der Korrekturwert wird abgespeichert und kann bei der nächstfolgenden Vollastanforderung abgerufen werden, wie dies im Schritt S2 erfolgt.

Alternativ wird der ausgewählte geänderte Sollwert als neuer Sollwert abhängig von der Drehzahl abgespeichert.
Anstelle des in Fig. 1 dargestellten Ventilantriebes läßt sich die Korrektur freilich auch bei anderen Ventilantrieben durchführen, beispielsweise bei Ventilen mit Magnetantrieb.

## Patentansprüche

1. Verfahren zum Einstellen des maximalen Ventilhubes eines Einlaßventils einer Brennkraftmaschine, bei dem ein Stellglied zum Verstellen eines Ventilantriebes gesteuert wird, der dem Einlaßventil mindestens eines Zylinders zugeordnet ist, und
bei Vollastanforderung aus einem Kennfeld abhängig von der momentanen Drehzahl der Brennkraftmaschine ein Sollwert des maximalen Ventilhubes ermittelt wird, wobei
der Sollwert derart korrigiert wird, daß ein angesaugter Massenstrom bei der momentanen Drehzahl in den Zylinder maximal ist und
das Stellglied abhängig von dem korrigierten Sollwert gesteuert wird.

2. Verfahren nach Anspruch 1, **dadurch gekennzeichnet, daß** durch Verändern des Sollwertes des maximalen Ventilhubes und Messen des Massenstroms in den Zylinder derjenige maximale Ventilhub ermittelt wird, bei dem ein maximaler Massenstrom in den Zylinder bei der momentanen Drehzahl erreicht wird.

3. Verfahren nach Anspruch 1 oder 2, **gekennzeichnet durch** folgende Schritte der Korrekturfunktion:
a) Abfrage der Vollastanforderung,
b) Einstellen des maximalen Ventilhubes auf den Sollwert, der bei der letzten Vollastkorrektur gespeichert wurde,
c) Verändern des Sollwertes des maximalen Ventilhubes in vorbestimmten Schritten nach oben und paralleles Speichern von Datenpaaren aus erfaßtem Massenstrom in den Zylinder und dem zugeordneten veränderten Sollwert des maximalen Ventilhubs, wobei die Drehzahl innerhalb bestimmter Grenzen bleiben muß,
d) Verändern des Sollwertes des maximalen Ventilhubes in vorbestimmten Schritten nach unten bei parallelem Speichern von Datenpaaren aus erfaßtem Massenstrom und dem zugeordneten veränderten maximalen Ventilhub, wobei die Drehzahl innerhalb bestimmter Grenzen bleiben muß,
e) Auswahl des Datenpaares, das den maximalen Massenstrom in den Zylinder beinhaltet, und ermitteln eines Korrekturwertes aus dem ausgewählten veränderten Sollwert des maximalen Ventilhubes, und dem Sollwert des maximalen Ventihubes, der aus dem Kennfeld abhängig von der aktuellen Drehzahl ermittelt ist, und
f) Abspeichern des Korrekturwertes in einem Tabellenspeicher und Korrigieren des Sollwertes mit dem Korrekturwert.

4. Verfahren nach Anspruch 3, **dadurch gekennzeichnet, daß** der Korrekturwert ein Korrekturfaktor ist, mit dem der aus dem Kennfeld entnommene Sollwert des maximalen Ventilhubes multipliziert wird.

5. Verfahren nach Anspruch 3, **dadurch gekennzeichnet, daß** der Korrekturwert aus der Differenz zwischen dem ausgewählten und dem aus dem Kennfeld entnommenen maximalen Ventilhub ermittelt wird.

6. Verfahren nach einem der Ansprüche 1 bis 5, **dadurch gekennzeichnet, daß** bei Überschreiten einer vorbestimmten Kühlwassertemperatur und Vollastanforderung die Korrektur ausgelöst wird.

7. Anwendung des Verfahrens nach einem der Ansprüche 1 bis 6 bei einem Ventilglied, bei dem durch eine relative Verdrehung zweier ein Einlaßventil betätigender Nockenwellen gegeneinander der maximale Ventilhub veränderbar ist.

## Claims

1. Method for setting the maximum valve lift of an inlet valve of an internal combustion engine, in which an actuator is controlled to adjust a valve gear associated with the inlet valve of at least one cylinder and, in the event of a full-load demand, a desired value for the maximum valve lift is determined from a characteristic map as a function of the instantaneous speed of the internal combustion engine, the desired value being corrected in such a way that an intake mass flow into the cylinder is at a maximum at the instantaneous speed, and the actuator being controlled as a function of the corrected desired value.

2. Method according to Claim 1, **characterized in that** the maximum valve lift at which a maximum mass flow into the cylinder at the instantaneous speed is achieved is determined by adjusting the desired value of the maximum valve lift and measuring the mass flow into the cylinder.

3. Method according to Claim 1 or 2, **characterized by** the following steps of the correction function:
a) interrogation of the full-load demand,
b) setting the maximum valve lift to the desired value stored during the last full-load correction,
c) adjusting the desired value of the maximum valve lift upwards in predetermined steps and, in parallel, storing pairs of data comprising the detected mass flow into the cylinder and the associated adjusted desired value of the maximum valve lift, it being a requirement that the rotational speed should remain within certain limits,
d) adjusting the desired value of the maximum valve lift downwards in predetermined steps and, in parallel, storing pairs of data comprising the detected mass flow and the associated adjusted maximum valve lift, it being a requirement that the rotational speed should remain within certain limits,
e) selecting the pair of data which contains the maximum mass flow into the cylinder and determining a correction value from the selected adjusted desired value of the maximum valve lift and the desired value of the maximum valve lift determined from the characteristic map as a function of the current rotational speed, and
f) storing the correction value in a table memory and correcting the desired value with the correction value.

4. Method according to Claim 3, **characterized in that** the correction value is a correction factor by which the desired value of the maximum valve lift taken from the characteristic map is multiplied.

5. Method according to Claim 3, **characterized in that** the correction value is determined from the difference between the selected valve lift and the maximum valve lift taken from the characteristic map.

6. Method according to one of Claims 1 to 5, **characterized in that** the correction is triggered when a predetermined coolant temperature is exceeded and there is a full-load demand.

7. Use of the method according to one of Claims 1 to 6 for a valve gear in which the maximum valve lift can be adjusted by relative rotation oil two camshafts actuating an inlet valve.

## Revendications

1. Procédé destiné au réglage de la course maximum d'une soupape d'admission d'un moteur à combustion inteme, dans lequel est contrôlé un élément de réglage destiné à l'ajustage d'un entraînement de soupape, qui est affecté à la soupape d'admission d'au moins un cylindre et
dans lequel est déterminée, en cas de demande de pleine charge, une valeur de consigne de la course maximum de soupape, à partir d'un diagramme de caractéristiques et en fonction de la vitesse momentanée de rotation du moteur à combustion interne,
la valeur de consigne étant corrigée de telle manière qu'un flux massique aspiré dans le cylindre est maximum à la vitesse momentanée de rotation et
l'élément de réglage étant commandé en fonction de la valeur de consigne corrigée.

2. Procédé selon la revendication 1 **caractérisé par le fait que**, en modifiant la valeur de consigne de la course maximum de soupape et en mesurant le flux massique dans le cylindre, on détermine la course maximum de soupape pour laquelle on obtient, à la vitesse momentanée de rotation, un flux massique maximum dans le cylindre.

3. Procédé selon la revendication 1 ou 2 **caractérisé par** les étapes suivantes de la fonction de correction:
a) Interrogation de la demande de pleine charge.
b) Réglage de la course maximum de soupape sur la valeur de consigne qui a été mémorisée lors de la dernière correction à pleine charge.
c) Modification de la valeur de consigne de la course maximum de soupape, par pas déterminés, vers le haut, et mémorisation en parallèle de paires de données composées du flux massique M détecté dans le cylindre et de la valeur de consigne modifiée correspondante de la course maximum de soupape, la vitesse de rotation restant obligatoirement entre des valeurs seuils déterminées.
d) Modification de la valeur de consigne de la course maximum de soupape, par pas déterminés, vers le bas, et mémorisation en parallèle de paires de données composées du flux massique détecté et de la valeur de consigne modifiée correspondante de la course maximum de soupape, la vitesse de rotation restant obligatoirement entre des valeurs seuils déterminées,
e) Choix de la paire de données qui renferme le flux massique maximum dans le cylindre et détermination d'une valeur de correction, à partir de la valeur de consigne modifiée correspondante de la course maximum de soupape et de la valeur de consigne de la course maximum de soupape déterminée sur le diagramme de caractéristiques en fonction de la vitesse actuelle de rotation, et
f) Mémorisation de la valeur de correction dans une mémoire à tableaux et correction de la valeur de consigne avec la valeur de correction.

4. Procédé selon la revendication 3 **caractérisé par le fait que** la valeur de correction est un facteur de correction avec lequel est multipliée la valeur de consigne de la course maximum de soupape extraite du diagramme de caractéristiques.

5. Procédé selon la revendication 3 **caractérisé par le fait que** la valeur de correction est déterminée à partir de la différence entre la valeur choisie de la course de la soupape et la valeur maximum de la course de soupape extraite du diagramme de caractéristiques.

6. Procédé selon l'une des revendications 1 à 5 **caractérisé par le fait que**, lors du dépassement d'une température prédéterminée de l'eau de refroidissement et demande de pleine charge, la correction est déclenchée.

7. Application du procédé selon l'une des revendications 1 à 6 à un élément de soupape dans lequel la course maximum de soupape peut être modifiée par une rotation l'un par rapport à l'autre de deux arbres à cames qui actionnent une soupape d'admission.
